# FASCICULE DE BREVET EUROPEEN

(11) **EP 2 081 943 B1**
(45) Date de publication et mention de la délivrance du brevet: **07.02.2018**
(21) Numéro de dépôt: 07821692.6
(22) Date de dépôt: 23.10.2007
(51) Int. Cl.: C07F 15/02, C08K 5/00, C08K 5/56

(54) **COMPOSITION SILICONE ELASTOMERE RETICULANT A CHAUD, THERMIQUEMENT STABLE**
THERMISCH STABILE HEISSQUERVERNETZENDE ELASTOMER-SILICON-ZUSAMMENSETZUNG
THERMALLY-STABLE HOT CROSS-LINKING ELASTOMER SILICONE COMPOSITION

(30) Priorité: 24.10.2006 FR 0609307
(43) Date de publication de la demande: 29.07.2009
(73) Titulaire: Bluestar Silicones France, 69486 Lyon (FR)
(72) Inventeur: SAINT-JALMES, Laurent, 69390 Vourles (FR); STERIN, Sébastien, 69450 St-cyr au Mont D'or (FR); PRUD'HOMME, Christian, 69006 Lyon (FR); GEORGE, Catherine, 69290 Saint Genis-les-Ollieres (FR)
(86) Numéro de dépôt international: PCT/EP2007/061328
(87) Numéro de publication internationale: WO 2008/049828

(56) Documents cités:
- EP-A- 0 866 099
- FR-A1- 2 511 384
- US-A- 4 189 306
- US-A- 4 528 313
- DATABASE WPI Week 200679, Derwent Publications Ltd., London, GB; AN 2006-773514 & JP 2006 283012 A (ASAHI DENKA KOGYO KK) 19 Octobre 2006

## Description

La présente invention a trait à des élastomères silicones thermiquement stables ainsi qu'aux compositions organopolysiloxaniques permettant leur obtention par des réactions de polyaddition, de polycondensation ou de vulcanisation en présence de péroxyde. L'invention est tout particulièrement adaptée pour les compositions organopolysiloxaniques du type vulcanisable à chaud (EVC) en présence de péroxyde. Ces élastomères trouvent notamment leur application dans les pièces moulées et/ou extrudées nécessitant une stabilité thermique jusqu'à 250 °C. Comme exemples d'application on peut citer les joints thermiques, tels que joints de four ou les gaines pour câbles et fils électriques.

Les compositions d'organopolysiloxanes génératrices d'élastomères sont des matières disponibles bien connues dans le commerce. Par rapport aux élastomères organiques, les organopolysiloxanes ou silicones présentent des propriétés de tenue thermique supérieures. Cependant, au-delà de 200° C et plus particulièrement sur des plages de température comprises entre 220 et 250 °C, même les élastomères d'organopolysiloxane peuvent perdre leurs propriétés élastomériques et devenir durs et cassants après un certain temps d'exposition.

On a depuis longtemps tenté d'améliorer la stabilité thermique des silicones par l'addition de plusieurs types de composés à la matrice.

Le brevet britannique GB-A-1 251 305 propose ainsi d'incorporer au moins 3 % en poids de dioxide de titane fumé à la composition élastomérique de base et rapporte une amélioration du comportement (compression et résistance à la réversion) de l'élastomère durci à des températures de 232 et 315° C maintenues pendant 16 et 24 heures respectivement.

Par exemple, le brevet français FR-A-2 308 664 propose d'améliorer la stabilité thermique des compositions élastomériques à base de siloxanes durcis en incorporant du dioxide de titane (notamment de granulométrie comprise entre 15 et 40 nanomètres) et de l'oxyde de cérium et/ou de l'hydroxyde de cérium. Ces deux additifs ensemble seraient plus efficaces que le dioxyde de titane seul et permettraient d'améliorer la tenue de l'élastomère durci entre 220 et 270° C.

La demande de brevet européen EP-A-0 595 078 propose comme stabilisateur thermique un oxyde mixte à base de dioxide de titane comprenant de 1 à 30 % en poids d'oxyde d'aluminium ou d'oxyde de silicium, l'oxyde mixte ayant une surface spécifique BET comprise entre 10 et 150 m²/g. Les oxydes présentent une stabilité de leur surface spécifique à la chaleur supérieure à celle d'un simple dioxyde de titane P25 (BET 50 m²/g).

La demande de brevet européen EP-A-745 644 décrit des compositions organopolysiloxanes qui, en se réticulant, conduisent à des élastomères transparents ayant une stabilité thermique élevée. Pour ce faire, la composition d'organopolysiloxane comprend, dispersées en son sein, des particules organophiles faites d'au moins un oxyde métallique sous forme de nanoparticules polycristallines - formées de préférence de cristallites de 4 à 6 nm - de taille d'au plus 50 nm et de surface spécifique BET d'au moins 250 m²/g, de préférence comprise entre 250 et 300 m²/g, et ayant subi un traitement de surface pour les rendre organophiles, consistant à greffer des groupements organosiliciques. Il n'est pas prévu de coloration de la composition d'organopolysiloxane.

Une autre solution a été préconisé par le brevet américain US-2 445 567 qui propose, afin d'éviter les problèmes de gélification des compositions à base de polysiloxanes substitués par des groupements hydrolysables, l'utilisation d'un stabilisant thermique qui est un sel métallique d'un acide carboxylique, le métal étant choisi parmi le fer, le cobalt, le nickel et le cuivre. Parmi les sels métalliques de fer sont cités :
- les sels aliphatiques saturés d'acides gras, par exemple, l'acétate de fer, le propionate de fer, le butyrate de fer, le n-hexanoate de fer, le 2-éthylhexanoate de fer,
- les sels aliphatiques ou aromatique d'acide polycarboxylique tels que l'oxalate de fer, le succinate de fer, l'adipate de fer, le maléate de fer, le phthalate de fer,...

Cependant, ces additifs présentent pour la plupart d'entre eux des problèmes de solubilité dans les compositions silicones.

Bien que ces solutions proposées présentent pour certaines des avantages non négligeables, l'industrie des silicones est toujours à la recherche de nouveaux additifs afin de stabiliser de manière importante les élastomères de silicone dans le cas de hautes températures notamment supérieures ou égale à 250° C maintenues sur des durées importantes. Il existe donc le besoin d'améliorer encore la stabilité thermique de ces élastomères d'une manière permettant la préservation leurs propriétés élastomériques, même en cas d'expositions répétées et/ou prolongées à la chaleur et de trouver des additifs ne présentant pas des problèmes de solubilité dans les compositions silicones.

La présente invention a donc pour objectif de fournir des compositions d'organopolysiloxanes qui, en se réticulant, conduisent à des élastomères silicones thermiquement stables ayant une stabilité thermique élevée.

Par élastomère silicone thermiquement stable dans le sens de l'invention, on entend notamment un élastomère silicone qui conserve des propriétés élastomériques et ne devient ni dur ni cassant lorsqu'il est soumis à une température supérieure à 200° C, notamment comprise entre 200° C et 275° C, maintenue pendant plusieurs jours, notamment 3 jours. De manière tout à fait préférée, il s'agit d'élastomères résistant ainsi à une température supérieure à 230° C, notamment comprise entre 230° C et 300° C, maintenue pendant plus de 3 jours ou plus.

En effet, de manière tout à fait remarquable, les inventeurs ont par exemple obtenu conformément à l'invention un élastomère conservant des propriétés élastomériques acceptables et ne devenant donc pas cassant après un traitement de 7 jours à 250° C. Dureté, résilience, résistance à la rupture, allongement à la rupture et le module à 100% sont restés dans des limites tout à fait acceptables, c'est-à-dire dans des limites permettant l'usage prévu de l'élastomère.

La présente invention a donc pour objet une composition d'organopolysiloxane réticulable en élastomère, conduisant lorsqu'elle est réticulée à un élastomère thermiquement stable, comprenant au moins un stabilisant thermique **(S)** qui est un complexe de fer (III) ayant pour formule:

Fe[Lx;By;Cz]

dans laquelle:
- x, y et z représentent le nombre de mole de chaque espèce avec:
- 0<x≤3, 0<y≤(3-x-z); 0≤z≤(3-x-y) et [x+y+z]=3,
- le ligand **L** est un β-dicétonate **(A)** dérivé d'une β-dicétone de formule **(I)** suivante: 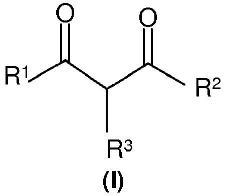 dans laquelle :
   - R¹ est un groupement représenté par la formule **(II)** suivante:

      (Y)ₙ-Φ- **(II)**

      dans laquelle :
      - n est un nombre entier de 0 à 5,
      - Φ est un phényle, et
      - chaque groupement Y, identique ou différent, est un atome d'hydrogène ou un groupement choisi parmi le groupe constitué par une chaîne hydrocarbonée ayant de 1 à 40 atomes de carbone, un alcoxy, un groupement silylé et un atome d'halogène;
   - le groupement R² représente un groupement ayant la même définition que R¹, identique ou différent de R¹, un atome d'hydrogène ou un groupement choisi parmi le groupe constitué par un radical hydrocarboné ayant de 1 à 40 atomes de carbone, éventuellement interrompues par un ou plusieurs atomes d'oxygène, un radical aralkyle, un alcoxy et un groupement silylé;
   - le groupement R³ représente un atome d'hydrogène ou un groupement hydrocarboné ayant de 1 à 40 atomes de carbone éventuellement interrompu par un ou plusieurs hétéroatome(s), et
   - R¹, R² et R³ pouvant éventuellement être reliés entre eux, deux à deux, par une chaîne hydrocarbonée éventuellement interrompue par un ou plusieurs hétéroatome(s) de manière à former un cycle,
   - les ligands B et C, identiques ou différents, sont des carboxylates.

Selon un mode de réalisation préféré, les ligands **B** et **C,** identiques ou différents, ont pour formule:

R⁴COO⁻

- dans laquelle R⁴ est un radical organique monovalent hydrocarbonés en C₁ - C₄₀, éventuellement substitué.

Il est particulièrement avantageux que les ligands **B** et **C,** identiques ou différents, soient choisis parmi le groupe constitué par un carboxylate aromatique et un carboxylate d'acide gras saturé en C₁-C₄₀.

Parmi les carboxylates d'acide gras saturé en C₁-C₄₀, on peut citer les anions des acides correspondants suivants :
- acide formique, acide acétique, acide propionique, acide butyrique, acide caproïque, acide caprylique, acide caprique, acide laurique, acide myristique, acide palmitique, acide margarique, acide stéarique, acide arachidique, acide béhénique, acide lignocérique, acide cérotique, acide montanique, acide mélissique, acide lacéroïque et acide benzoique.

D'autres exemples de β-dicétonates sont des dérivés des β-dicétones suivantes :
- stéaroylbenzoylméthane (ou Rhodiastab®-50 vendu par la société Rhodia, CAS 58446-52-9),
- dibenzoylméthane (ou Rhodiastab®-83 vendu par la société Rhodia, CAS 120-46-7),
- octanoylbenzoylméthane (ou Rhodiastab®-92 vendu par la société Rhodia, CAS68892-13-7),
- 4-t-butyl-4'-méthoxy-dibenzoylméthane (CAS 70356-09-1)
- 4,4'-diméthoxy-dibenzoylméthane, et
- 4,4'-di-tert-butyl-dibenzoylméthane.

Un mode de réalisation tout particulièrement préféré est lorsque le β-dicétonate **(A)** est dérivé d'une β-dicétone stéaroylbenzoylméthane de formule **(II)** suivante

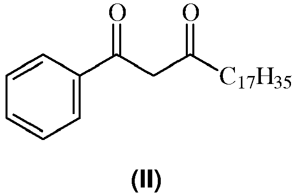

Le stabilisant thermique est présent en des quantités variables suivant la nature de ce dernier. A titre d'exemple on pourra ajouter une quantité allant de 0,001 à 3 parties en poids pour 100 parties de la composition silicone et de préférence de 0,01 à 1 partie en poids pour 100 parties de la composition silicone. Il peut-être ajouté pur, en solution dans un solvant organique, dans une huile silicone, dans une gomme silicone ou même dans un mélange maître c'est-à-dire une composition silicone comprenant une gomme silicone et une charge suivant le type d'application.

### Compositions silicone

Les compositions polyorganosiloxanes durcissables visées dans le cadre de la présente invention, présentées en un seul ou plusieurs emballage(s) (mono- ou multicomposants), renferment, outre le stabilisant thermique **(S),** un constituant principal formé d'un ou plusieurs constituant(s) polyorganosiloxane(s), un catalyseur approprié et éventuellement un ou plusieurs composé(s) pris dans le groupe formé par notamment : les charges renforçantes, les agents de réticulation, les agents anti-structure, les agents d'adhérence, les agents inhibiteurs du catalyseur.

Le stabilisant thermique **(S)** est utile pour toute composition polyorganosiloxane destinée à l'obtention d'un élastomère silicone, soit réticulant à température élevée sous l'action de péroxydes organiques (EVC) soit réticulant en présence d'un catalyseur métallique à température ambiante ou à la chaleur par des réactions de polyaddition (EVC, LSR ou RTV de polyaddition) ou par des réactions de polycondensation (RTV de polycondensation).

Les expressions RTV, LSR, EVC sont bien connues de l'homme de métier : RTV est l'abréviation de "Room Temperature Vulcanizing" ; LSR est l'abréviation de "Liquid Silicone Rubber" ; HCR est l'abréviation de "Heat Cured Rubber" et EVC est l'abréviation de "Elastomère Vulcanisable à Chaud".

L'invention s'applique tout particulièrement aux compositions élastomériques d'organopolysiloxane vulcanisables à chaud qui comprennent :
- 100 parties d'au moins une gomme diorganopolysiloxane **A** ayant une viscosité supérieure à 1 000 000 mPa.S à 25° C,
- de 5 à 150 parties d'une charge renforçante **B,**
- de 0,1 à 7 parties d'un péroxyde organique **C,** et
- éventuellement au moins un composé "antistructure" **F.**

De tels EVC (élastomère vulcanisable à chaud) appelé EVC au péroxyde sont par exemple décrits dans les brevets US-A-3 142 655, 3 821 140, 3 836 489 et 3 839 266.

Les gommes **A** sont des produits bien connus, commercialisés par les fabricants de silicones et elles peuvent être fabriquées en opérant selon les techniques déjà connues.

Les gommes diorganopolysiloxaniques **A** de viscosité supérieure à 1 000 000 mPa.s à 25° C, de préférence supérieure à 2 000 000 mPa.s à 25° C, sont des polymères linéaires, de poids moléculaire élevé, dont la chaîne diorganopolysiloxane est constituée essentiellement des motifs de formule R₂SiO_{2/2}, cette chaîne est bloquée à chaque extrémité par des motifs de formule R₃SiO_{1/2} et/ou le radical de formule OR'. R et R' sont des radicaux organiques, en particulier alcoyle. La présence, le long de la chaîne diorganopolysiloxane, de faibles quantités de motifs autres que R₂SiO_{2/2}, par exemple de formule RSiO_{3/2} et/ou SiO_{4/2}, n'est cependant pas exclue dans la proportion d'au plus 2 % par rapport au nombre de motifs R₂SiO_{2/2}. Bien que la signification des radicaux R et R' soit explicitée ci-dessous plus en détail, on doit préciser que par radical alcoyle, on entend des radicaux alcoyles en C₁-C₄ et plus spécialement les radicaux méthyle, éthyle, n-propyle et n-butyle.

A titre d'exemples concrets de motifs de formules R₂SiO_{2/2} et R₃SiO_{1/2} et de radicaux de formule OR', peuvent être cités ceux de formules : (CH₃)₂SiO_{2/2}, CH₃(CH₂=CH)SiO_{2/2}, CH₃(C₆H₅)SiO_{2/2}, (C₆H₅)₂SiO_{2/2}, CH₃(C₂Hₛ)SiO_{2/2}, (CH₃CH₂CH₂)CH₃SiO_{2/2}, CH₃(n.C₃H7)SiO_{2/2}, (CH₃)₃SiO_{1/2}, (CH₃)₂CH₂=CHSiO_{1/2}, (CH₃)(C₆H₅)₂SiO_{1/2}, (CH₃)(C₆H₅)(CH₂=CH)SiO_{1/2}, CF₃CH₂CH₂SiO_{1/2}, -OH, -OCH₃, -OC₂H₅, -O-n.C₃H₇, -O-iso.C₃H₇, -O-n.C₄H₉ et -OCH₂CH₂OCH₃.

Les gommes **A** préférées sont les gommes formées d'un enchaînement de motifs siloxy de formule R₂SiO_{2/2}, bloqués à chaque extrémité de leurs chaînes par un motif siloxy de formule R₃SiO_{1/2} et/ou un radical de formule OR'; dans ces formules, les symboles R, identiques ou différents, représentent des radicaux méthyle, éthyle, n-propyle, phényle, vinyle et trifluoro-3,3,3 propyle, au moins 60 % en nombre de ces radicaux étant des radicaux méthyle et au plus 3 % molaire des motifs siloxy étant des motifs organovinylsiloxy, le symbole R' représente un atome d'hydrogène, un radical alcoyle ayant de 1 à 4 atomes de carbone, le radical bétaméthoxy-éthyle.

Dans le cadre de la présente invention on préfère tout particulièrement utiliser des gommes diméthylpolysiloxanes vinylées, c'est-à-dire comportant des radicaux vinyle liés aux atomes de silicium dans la chaîne et/ou aux extrémités de la chaîne à une teneur molaire en motif vinylméthylsiloxy d'au plus 1 %.

Les charges **B,** de préférence les silices renforçantes **B** sont utilisées à raison de 5 à 150 parties, de préférence de 8 à 100 parties, pour 100 parties de gommes diorganospolysiloxanes **A.** Elles sont choisies parmi les silices de combustion et les silices de précipitation. Elles ont une surface spécifique, mesurée selon les méthodes BET et CTAB, d'au moins 50 m²/g, de préférence supérieure à 70 m²/g, une dimension moyenne des particules primaires inférieure à 80 nanomètres et une densité apparente inférieure à 200 g/litre.

Ces silices peuvent être incorporées telles quelles ou après avoir été traitées par des composés organosiliciques habituellement utilisés pour cet usage. Parmi ces composés figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %, de préférence 18 % environ.

En plus des silices renforçantes **B** peuvent être introduites des charges minérales semi-renforçantes ou de bourrage **B.** Ces charges **B** sont plus grossières et ont un diamètre particulaire moyen supérieur à 0,1 µm. Ces charges **B** sont représentées plus spécialement par le quartz broyé, les argiles calcinées, les silices de diatomées, le carbonate de calcium, les oxydes de fer, de titane, de magnésium, d'aluminium, le sulfate de zinc et le sulfate de baryum. Elles sont introduites à raison de 5 à 120 parties, de préférence de 10 à 50 parties, pour 100 parties de gomme **A.** Ces charges minérales peuvent être utilisées telles quelles, c'est-à-dire non traitées ou traitées avec les composés organosiliciques mentionnés ci-avant dans le cas des silices renforçantes **B.**

Les péroxydes organiques **C** sont utilisés à raison de 0,1 à 7 parties, de préférence de 0,2 à 5 parties, pour 100 parties des gommes **A.** Ils sont bien connus des techniciens et comprennent plus spécialement le péroxyde de benzoyle, le péroxyde de dichloro-2,4 benzoyle, le péroxyde de dicumyle, le bis(t-butylperoxy)-2,5 diméthyl-2,5 hexane, le perbenzoate de t-butyle, le carbonate de péroxy t-butyle et d'isopropyle, le péroxyde de di-t-butyle, le bis(t-butylperoxy)-1,1 triméthyl-3,3,5 cyclohexane. Ces matériaux peuvent également être réticulés par le Pt (composés platiniques) en présence d'organopolysiloxane porteur de fonctions réactives de type SiH.

Ces divers péroxydes se décomposent à des températures et à des vitesses parfois différentes. Ils sont choisis en fonction des conditions de durcissement exigées.

Les compositions selon l'invention peuvent comporter en outre de 0,1 à 10 parties, de préférence de 0,3 à 5 parties, d'au moins une huile diorganopolysiloxanique **F.** de viscosité d'au plus 5 000 mPa.s à 25° C formée d'un enchaînement de motifs de formule R"₂SiO_{2/2} et bloquée à chaque extrémité de sa chaîne par un radical de formule OR'; dans ces formules, les symboles R", identiques ou différents, représentent des radicaux méthyle, phényle, vinyle, au moins 40 % en nombre de ces radicaux étant méthyle et le symbole R'a la signification donnée sous A.

La signification des symboles R" et R' a été explicitée précédemment.

A titre d'exemples concrets de motifs de formule R"₂SiO_{2/2} et de radicaux de formule OR', peuvent être cités ceux de formules : (CH₃)₂SiO_{2/2}, CH₃(CH₂=CH)SiO_{2/2}, CH₃(C₆H₅)SiO_{2/2}, (C₆H₅)₂SiO_{2/2}, C₆H₅(CH₂=CH)SiO_{2/2}, - OH, -OCH₃, -OC₂H₅, -O-n.C₃H₇, -OCH₂CH₂OCH₃.

De préférence, sont utilisées :
- des huiles diméthylpolysiloxanes bloquées à chaque extrémité de leur chaîne par des radicaux hydroxyle, méthoxyle, bétaméthoxyéthoxyle, de viscosité de 10 à 200 mPa.s à 25°C;
- des huiles méthylphénylpolysiloxanes, constituées de motifs CH₃(C₆H₅)SiO_{2/2}, bloquées à chaque extrémité de leur chaîne par des radicaux hydroxyle et/ou méthoxyle, de viscosité de 40 à 2 000 mPa.s à 25° C.

L'utilisation des huiles **F** a pour objet d'empêcher les compositions de l'invention de subir une évolution au cours du stockage, et plus précisément de se structurer, de durcir; ce sont donc des agents "antistructures".

D'autres agents "antistructures" peuvent remplacer en totalité ou en partie les huiles **F.,** par exemple le diphénylsilanediol et les silanes de formules :

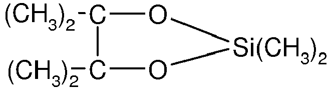

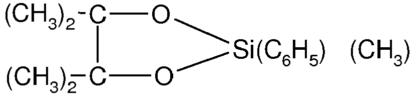

La préparation des compositions conformes à l'invention s'effectue à l'aide de moyens mécaniques connus, par exemple de pétrins, de mélangeurs à cylindres, de mélangeurs à vis ou des malaxeurs à bras. Les divers constituants sont incorporés dans ces appareils dans un ordre pouvant être quelconque. Il est toutefois recommandé de charger tout d'abord les gommes A. et les silices renforçantes **B.** et en dernier lieu les péroxydes **C.**

Les compositions sont réticulées par chauffage dans le cas d'une catalyse au péroxyde. La durée du chauffage varie évidemment avec la température, la pression et la nature des réticulants. Elle est généralement de l'ordre de plusieurs minutes vers 100-180 °C.

L'invention s'applique bien entendu aussi aux compositions élastomériques vulcanisables à froid ou à chaud, réticulant par polyaddition ou polycondensation.

Les compositions polyorganosiloxanes, bicomposantes ou monocomposantes, réticulant à température ambiante ou à la chaleur par des réactions de polyaddition, essentiellement par réaction de groupements hydrogéno-silylés sur des groupements alkényl-silylés, en présence d'un catalyseur métallique, généralement à base de platine, sont décrites par exemple dans les brevets US-A-3 220 972, 3 284 406, 3 436 366, 3 697 473 et 4 340 709. Dans le cas des compositions réticulant à chaud par des réactions de polyaddition appelées EVC de polyaddition, le (ou les) constituant(s) polyorganosiloxane(s) porteur(s) de groupements alkényl-silylés ont une viscosité à 25°C supérieure à 500 000 mPa.s et, de préférence comprise entre 1 million de mPa.s et 30 millions de mPa.s et même davantage. Le (ou les) constituant(s) polyorganosiloxane(s) porteur(s) de groupements hydrogéno-silylés ont généralement une viscosité à 25° C au plus égale à 10 000 mPa.s et, de préférence, comprise entre 5 et 1 000 mPa.s.

Des exemples de compositions polyorganosiloxanes sont celles, monocomposantes ou bicomposantes, réticulant à la chaleur par des réactions de polyaddition, appelées compositions EVC de polyaddition, qui comprennent :
(a') 100 parties en poids d'une gomme polydiorganosiloxane qui est un homopolymère ou copolymère linéaire présentant en moyenne par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux (et de préférence la totalité de ces autres radicaux) étant des radicaux méthyle, et ladite gomme présentant une viscosité supérieure à 500 000 mPa.s à 25° C et de préférence d'au moins 1 million de mPa.s ;
(b') au moins un polyorganohydrogénosiloxane choisi parmi les homopolymères et les copolymères linéaires, cycliques ou en réseau présentant en moyenne par molécule au moins 2, de préférence au moins 3 atomes d'hydrogène liés à des atomes de silicium différents et dont les radicaux organiques liés aux atomes de silicium sont choisis parmi les radicaux méthyle, éthyle, phényle, au moins 60 % molaire de ces radicaux (et de préférence la totalité de ces radicaux) étant des radicaux méthyle, et présentant une viscosité allant de 5 à 1 000 mPa.s à 25° C, le réactif (b') étant utilisé en quantité telle que le rapport molaire des fonctions hydrure de (b ') sur les groupes vinyles de (a') est compris entre 0,4 et 10 et de préférence entre 1,1 et 5 ;
(c') une quantité catalytiquement efficace d'un catalyseur au platine ;
(d') 0,5 à 150 partie(s) en poids, de préférence de 1 à 100 parties en poids, de charge(s) siliceuse(s) pour 100 parties en poids de l'ensemble des polyorganosiloxanes (a') + (b').

Si l'on a besoin de retarder la réticulation, on peut ajouter à la composition polyorganosiloxane réticulant par des réactions de polyaddition, un inhibiteur (f') du catalyseur au platine. Ces inhibiteurs sont connus. On peut en particulier utiliser les amines organiques, les silazanes, les oximes organiques, les diesters de diacides carboxyliques, les cétones acétyléniques et surtout, et il s'agit là des inhibiteurs préférés, les alcools acétyléniques (cf. par exemple FR-A-1 528 464, 2 372 874 et 2 704 553) et les polydiorganosiloxanes cycliques constitués essentiellement de motifs (II) où Z = vinyle et où x = y = 1, éventuellement associés à des motifs (I) où n = 2. L'inhibiteur, quand on en utilise un, est engagé à raison de 0,005 à 5 parties en poids, de préférence 0,01 à 3 parties en poids, pour 100 parties de la gomme (a').

Ces alcools acétyléniques, qui font partie des bloqueurs thermiques de réaction d'hydrosilylation préférés, ont pour formule :

R¹ - (R²) C (OH) - C ≡ CH

formule dans laquelle,
- R¹ est un radical alkyle linéaire ou ramifié, ou un radical phényle ;
- R² est H ou un radical alkyle linéaire ou ramifié, ou un radical phényle ;
les radicaux R¹, R² et l'atome de carbone situé en a de la triple liaison pouvant éventuellement former un cycle ;
le nombre total d'atomes de carbone contenu dans R¹ et R² étant d'au moins 5, de préférence de 9 à 20.
Lesdits alcools sont, de préférence, choisis parmi ceux présentant un point d'ébullition supérieur à 250 °C. On peut citer à titre d'exemples :
- l'éthynyl-1-cyclohexanol 1 ;
- le méthyl-3 dodécyne-1 ol-3 ;
- le triméthyl-3,7,11 dodécyne-1 ol-3 ;
- le diphényl-1,1 propyne-2 ol-1 ;
- l'éthyl-3 éthyl-6 nonyne-1 ol-3 ;
- le méthyl-3 pentadécyne-1 ol-3.

Ces alcools α-acétyléniques sont des produits du commerce.

La préparation des compositions polyorganosiloxanes appelées EVC de polyaddition s'effectue à l'aide de moyens mécaniques connus, par exemple des dispositifs équipés des mélangeurs à vis, des mélangeurs à cylindres ou des malaxeurs à bras. Les divers constituants sont incorporés dans ces appareils dans un ordre pouvant être quelconque ou qui tiendra compte de la forme monocomposante ou bicomposante souhaitée pour les compositions.

Les compositions polyorganosiloxanes contenant en plus le stabilisant thermique **(S)** peuvent être des compositions monocomposantes, c'est-à-dire livrées dans un seul emballage ; si la composition doit être stockée avant son utilisation ; il peut être souhaitable d'ajouter, dans le cas des compositions EVC de polyaddition, une quantité efficace d'un inhibiteur (dont on a parlé ci-avant) de l'action catalytique du platine qui disparaît par chauffage lors de la réticulation de la composition. Ces compositions contenant en plus de l'additif peuvent être aussi des compositions bicomposantes, c'est-à-dire livrées dans deux emballages distincts, dont un seul d'entre eux comporte le catalyseur de réticulation ; pour l'obtention de l'élastomère, on mélange le contenu des deux emballages et la réticulation a lieu grâce au catalyseur. De pareilles compositions monocomposantes et bicomposantes sont bien connues de l'homme de métier.

Des exemples de compositions organopolysiloxanes bicomposantes ou monocomposantes réticulant à température ambiante par des réactions de polycondensation sous l'action de l'humidité, en présence généralement d'un catalyseur métallique, par exemple un composé de l'étain ou du titane, sont décrites par exemple pour les compositions monocomposantes dans les brevets US-A-3 065 194, 3 542 901, 3 779 986, 4 417 042, et dans le brevet FR-A-2 638 752, et pour les compositions bicomposantes dans les brevets US-A-3 678 002, 3 888 815, 3 993 729 et 4 064 096.

La composition de polycondensation peut aussi comprendre un silane portant deux groupements hydrolysables et servant de silane allongeant. Ces silanes difonctionnels sont parfaitement connus de l'homme du métier.

Les compositions selon l'invention sont stables au stockage. Elles sont particulièrement aptes au moulage et à l'extrusion-moulage. Elles se transforment aisément ce qui permet de réaliser des formes très variées.

La présente invention a également pour objet un élastomère d'organopolysiloxane thermiquement stable susceptible d'être obtenu par durcissement et/ou réticulation d'une composition telle que définie supra ou selon l'une quelconque des revendications 1 à 5.

Un autre objet de l'invention consiste en un nouveaux stabilisant thermique **(S)** pour une composition d'organopolysiloxane réticulable en élastomère qui est un complexe de fer (III) ayant pour formule :

Fe[Lₓ;B_{y};C_{z}]

dans laquelle :
- x, y et z représentent le nombre de mole de chaque espèce avec :
   - 0 < x ≤ 3, 0 < y ≤ (3-x-z); 0 ≤ z ≤ (3-x-y) et [x+ y + z] = 3,
- le ligand **L** est un β-dicétonate **(A)** telle que défini ci-dessus ou selon la revendication 1, et
- les ligands **B** et **C,** identiques ou différents, sont des carboxylates.

De préférence :
- 0 < x ≤ 3, 0 < y ≤ (3-x-z); 0 ≤ z ≤ (3-x-y) et [x+ y + z] = 3, et
- les ligands **B** et **C,** identiques ou différents, sont choisis parmi le groupe constitué par un carboxylate d'un acide gras saturé en C₁-C₄₀ et un carboxylate aromatique.

Les β-dicétones utilisées pour préparer les β-dicétonates selon l'invention sont disponibles dans le commerce ou peuvent être préparée par exemple par une réaction de Claisen telle que décrite dans le brevet EP 1 129 073, ou par réaction d'un carbanion d'une cétone sur un ester telle que décrite dans les brevets EP-454 623 ou US-5,015,623.

La préparation des stabilisants thermiques **(S)** ne présente pas de difficulté particulière pour l'homme du métier. Par exemple, on peut mélanger les molécules qui vont constituer les ligands A, B et C du stabilisant **(S),** de l'eau puis on ajoute de la potasse, un solvant organique (par exemple du toluène) et une solution de chlorure de fer hexahydratée. Après réaction, extraction et purification selon les techniques usuelles de chimie on obtient un stabilisant **(S)** selon l'invention. L'homme du métier variera les proportions de chacun des constituants afin d'obtenir le complexe souhaité.

Un autre objet de la présente invention concerne l'utilisation d'un stabilisant thermique **(S)** selon l'invention et tel que défini ci-dessus pour préparer un élastomère thermiquement stable, à partir d'une composition d'organopolysiloxane réticulable en élastomère.

Le dernier objet de l'invention concerne un procédé pour stabiliser thermiquement un élastomère silicone caractérisé en ce qu'on ajoute à une composition d'organopolysiloxane réticulable en élastomère un stabilisant thermique **(S)** selon l'invention et tel que défini ci-dessus.

L'invention va être maintenant décrite plus en détail à l'aide de modes de réalisation pris à titre d'exemples non limitatifs.

### EXEMPLES

### Exemple 1 : Synthèse des stabilisants thermiques (S) selon l'invention,

Rhodiastab®-50 = benzoyl stearyl methane (abréviation ci-après « **R50** ») 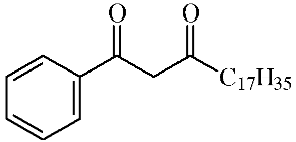 Ligand **A** = β-dicétonate dérivé de **R50.**

### a) Préparation du stabilisant (S1): Fe [Ligand A]₃ (non revendiqué)

Dans un réacteur de 100 ml muni d'une ancre, d'une sonde de température et d'un réfrigérant, on charge 19,5 g de « Rhodiastab® 50 » (50 mmoles), dans un mélange de 76g de méthanol et 85 g de toluène. Le milieu réactionnel est mis sous agitation à 60 °C et on ajoute 6,5 g de solution de potasse aqueuse à 49,8% poids (soit 58 mmoles de potasse, 1,14 équivalent par rapport aux moles de bétadicétone). Puis on ajoute 8.05 g de solution de chlorure de fer hexahydratée à 54,95% poids dans l'eau (soit 163 mmoles de fer). Après 15 minutes de temps de réaction, les phases sont séparées et la phase organique est lavée à l'eau permutée. Les solvants sont ensuite éliminés par distillation sous vide pour obtenir le produit final (14.54 g, solide rouge brun, point de fusion : 33°C).

### b) Préparation du stabilisant (S2): Fe [(Ligand A)₁, (stéarate)₁, (octanoate)₁]

Dans un réacteur de 200 ml muni d'un réfrigérant, d'une ancre et d'une sonde température, on charge en pied 4,91 g d'acide stéarique à 50% de pureté (18,1 mmoles), 2,55 g d'acide octanoïque (17,7 mmoles) et 6,86 g de « Rhodiastab® 50 » (17,8 mmoles) et 10,64 g d'eau. On met sous agitation à température ambiante et on ajoute 5,23 g de potasse à 49,6% en poids (46,9 mmoles). Puis, 61,51 g de toluène sont additionnés et enfin 9,09 g de solution de chlorure de fer hexahydratée à 53,32% poids dans l'eau (soit 17,9 mmoles de fer). Après 15 minutes de réaction, l'agitation est arrêtée et le milieu décante. Les phases sont séparées. La phase organique est lavée (eau permutée + solution de potasse aqueuse à 50% poids) jusqu'à l'obtention d'un pH neutre. Le toluène est ensuite éliminé par distillation sous vide pour obtenir 11,9 g de produit final (rendement = 78%).

### c) Préparation des stabilisants (S3) complexe fer (III) : Fe [(Ligand A)₁; (benzoate)₁ ; (octanoate)₁] :

Dans un réacteur de 200 ml muni d'un réfrigérant, d'une ancre et d'une sonde température, on charge en pied 2,58 g d'acide benzoïque (21,1 mmoles), 3 g d'acide octanoïque (21 mmoles) et 8,26 g de « Rhodiastab® 50 » (21,4 mmoles) et 29,21 g d'eau. On met sous agitation à température ambiante et on ajoute 9,38 g de potasse à 49,8% poids (83,4 mmoles). Puis, 42,72 g de toluène sont additionnés et enfin 10,90 g de solution de chlorure de fer hexahydratée à 54,95% poids dans l'eau (soit 22,2 mmoles de fer). Après 15 minutes de réaction, l'agitation est arrêtée et le milieu décante. Les phases sont séparées. La phase organique est lavée à l'eau permutée. Le toluène est ensuite éliminé par distillation sous vide pour obtenir le produit final (14,52 g, rendement = 97%, point de fusion = 34°C).

Ce mode opératoire est répété en faisant varier les constituants de départ et les stabilisants **(S4)** et **(S5)** ont été préparés.

Structure des complexes de Fe(III): Fe[Ligand A, benzoaten, octanoate]

| | Ratio molaire (mole) | | |
|---|---|---|---|
| Stabilisants | Ligand (A) | benzoate | octanoate |
| **(S3)** | 1 | 1 | 1 |
| **(S4)** | 0,110 | 0,110 | 2,780 |
| **(S5)** | 0,048 | 0,048 | 2,904 |

### Exemple 2 : Composition d'organopolysiloxane vulcanisable à chaud en présence de péroxyde

On mélange intimement avec un malaxeur:
- 100 parties d'un polyorganosiloxane a) qui est un poly(diméthyl)(méthylvinyl)-siloxane bloqué à chacune de ses deux extrémités par un motif triméthylsiloxy, contenant dans la chaîne 720 ppm de groupes vinyle, ayant une viscosité de 20 millions de mPa.s à 25 °C ;
- 46 parties de silice de combustion traitée D₄ (octaméthylcyclotétrasiloxane) de surface spécifique de 200 m²/g ;
- 2.4 parties d'une huile polydiméthylsiloxane bloquée à ses deux extrémités par des motifs diméthylhydroxysiloxy, contenant 9 % en poids d'hydroxyle OH, de viscosité 50 mPa.s à 25°C, et
- 1 partie d'un agent de couplage le gamma-méthacryloxypropyltriméthoxysilane ;

On obtient le mélange de base, que l'on transfère sur un mélangeur à cylindre, pour incorporer, pour 100 parties de ce mélange ci-dessus 1.25 partie du péroxyde de 2,4-dichloro benzoyle (à 50 %) (n°CAS 133-14-2) et suivant les tests x parties en poids d'un stabilisant **(S4)** ou **(S5)** pour 100 parties de mélange.

La composition est ensuite mise en forme et réticulée à environ 115°C pendant 8 minutes. Les élastomères obtenus ont subis une exposition de 3 jours à 250° C et 7 jours à cette même température. Les résultats sont indiqués dans le Tableau 1 suivant où l'on voit immédiatement que les EVC stabilisés par les additifs selon l'invention Tests 1 et 2 résistent à la température et conservent de bonnes propriétés élastomériques.

**Tableau 1 : Résultats**

| | Stabilisant thermique | **Comparatif sans addition de stabilisant thermique** | **Test 1 Invention** | **Test 2 Invention** |
|---|---|---|---|---|
| | (S5) (x) en poids | 0 | 0,026 | 0 |
| | (S4) (x) en poids | 0 | 0 | 0,026 |
| | | | | |
| DSA | Propriétés de l'élastomère (EVC) à l'initiale | 67 | 67 | 67 |
| RZ (%) | | 56 | 55 | 55 |
| R/R (Mpa) | | 11,2 | 10,8 | 11 |
| A/R (%) | | 351 | 352 | 347 |
| Module à 100% (Mpa) | | 2,78 | 2,7 | 2,8 |
| | | | | |
| DSA | Propriétés de l'élastomère après 3 jours à 250 °C | cassant | 69 | 68 |
| Résilience | | | 53 | 53 |
| Résistance à la rupture (Mpa) | | | 6,9 | 7 |
| Allongement à la rupture (%) | | | 245 | 250 |
| Module à 100% (Mpa) | | | 3,23 | 3,2 |
| | | | | |
| DSA | Propriétés de l'élastomère après 7 jours à 250 °C | cassant | 73 | 74 |
| Résilience | | | 58 | 58 |
| Résistance à la rupture (Mpa) | | | 6,6 | 6,6 |
| Allongement à la rupture (%) | | | 197 | 171 |
| Module à 100% (Mpa) | | | 3,8 | 4,3 |

### Abréviations dans le Tableau 1 :

- DSA: Dureté SHORE A: (norme DIN 53 505).
- RZ : Résilience: (norme DIN 53 512; valeur en %).
- R/R :: Résistance à la rupture (norme NF-46 002, valeur en M.Pa).
- A/R :: Allongement à la rupture (norme NF-46 002; valeur en %).

## Revendications

1. Composition d'organopolysiloxane réticulable en élastomère, conduisant lorsqu'elle est réticulée à un élastomère thermiquement stable, comprenant au moins un stabilisant thermique **(S)** qui est un complexe de fer (III) ayant pour formule :
Fe[Lₓ;B_{y};C_{z}]
dans laquelle :
- x, y et z représentent le nombre de mole de chaque espèce avec :
- 0 < x ≤ 3, 0 < y ≤ (3-x-z); 0 ≤ z ≤ (3-x-y) et [x+ y + z] = 3,
- le ligand **L** est un β-dicétonate **(A)** dérivée d'une β-dicétone de formule **(I)** suivante : 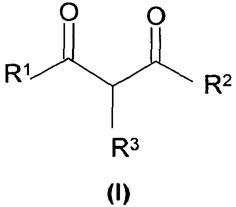 dans laquelle :
- R¹ est un groupement représenté par la formule **(II)** suivante:
(Y)ₙ-Φ- **(II)**
dans laquelle :
- n est un nombre entier de 0 à 5,
- Φ est un phényle, et
- chaque groupement Y, identique ou différent, est un atome d'hydrogène ou un groupement choisi parmi le groupe constitué par une chaîne hydrocarbonée ayant de 1 à 40 atomes de carbone, un alcoxy, un groupement silylé et un atomes d'halogène;
- le groupement R² représente un groupement ayant la même définition que R¹, identique ou différent de R¹, un atome d'hydrogène ou un groupement choisi parmi le groupe constitué par un radical hydrocarboné ayant de 1 à 40 atomes de carbone, éventuellement interrompues par un ou plusieurs atomes d'oxygène, un radical aralkyle, un alcoxy et un groupement silylé;
- le groupement R³ représente un atome d'hydrogène ou un groupement hydrocarbonées ayant de 1 à 40 atomes de carbone éventuellement interrompues par un ou plusieurs hétéroatome(s), et
- R¹, R² et R³ pouvant éventuellement être reliés entre eux, deux à deux, par une chaîne hydrocarbonée éventuellement interrompues par un ou plusieurs hétéroatome(s) de manière à former un cycle, et
- les ligands **B** et **C,** identiques ou différents, sont des carboxylates.

2. Composition selon la revendication 1 dans laquelle les ligands **B** et **C,** identiques ou différents, ont pour formule:
R⁴COO⁻
- dans laquelle R⁴ est un radical organique monovalent hydrocarbonés en C₁ - C₄₀, éventuellement substitué.

3. Composition selon la revendication 1 dans laquelle les ligands **B** et **C,** identiques ou différents, sont choisis parmi le groupe constitué par un carboxylate aromatique et un carboxylate d'acide gras saturé en C₁-C₄₀.

4. Composition selon la revendication 3 dans laquelle les ligands **B** et **C** sont choisis parmi les anions des acides correspondants suivants :
- acide formique, acide acétique, acide propionique, acide butyrique, acide caproïque, acide caprylique, acide caprique, acide laurique, acide myristique, acide palmitique, acide margarique, acide stéarique, acide arachidique, acide béhénique, acide lignocérique, acide cérotique, acide montanique, acide mélissique, acide lacéroïque et acide benzoique.

5. Composition selon l'une des revendications précédentes dans laquelle le β-dicétonate **(A)** est dérivé d'une β-dicétone stéaroylbenzoylméthane de formule **(II)** suivante

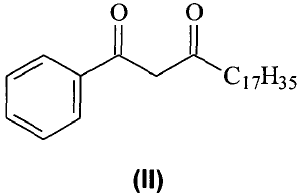

6. Elastomère d'organopolysiloxane thermiquement stable susceptible d'être obtenu par durcissement et/ou réticulation d'une composition telle que définie selon l'une quelconque des revendications 1 à 5.

7. Stabilisant thermique **(S)** pour une composition d'organopolysiloxane réticulable en élastomère qui est un complexe de fer (III) ayant pour formule :
Fe [Lₓ; By; C_{z}]
dans laquelle :
- x, y et z représentent le nombre de mole de chaque espèce avec :
- 0 < x ≤ 3, 0 < y≤ (3-x-z); 0 ≤ z ≤ (3-x-y) et [x+ y + z] = 3,
- le ligand **L** est un β-dicétonate **(A)** tel que défini selon la revendication 1, et
- les ligands **B** et **C,** identiques ou différents, sont des carboxylates.

8. Stabilisant thermique **(S)** selon la revendication 7 dans lequel le β-dicétonate **(A)** est dérivé d'une β-dicétone stéaroylbenzoylméthane de formule **(II)** suivante

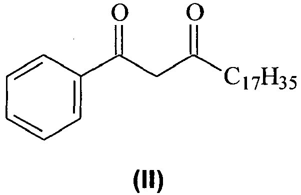

9. Stabilisant thermique **(S)** selon la revendication 7 dans lequel
- 0 < x ≤ 3, 0 <y ≤ (3-x-z); 0 ≤ z ≤ (3-x-y) et [x+ y + z] = 3,et
- les ligands **B** et **C,** identiques ou différents, sont choisis parmi le groupe constitué par un carboxylate d'un acide gras saturé en C₁-C₄₀ et un carboxylate aromatique.

10. Utilisation d'un stabilisant thermique **(S)** tel que défini selon l'une quelconque des revendications 7 à 9 pour préparer un élastomère thermiquement stable, à partir d'une composition d'organopolysiloxane réticulable en élastomère.

11. Procédé pour stabiliser thermiquement un élastomère silicone **caractérisé en ce qu'**on ajoute à une composition d'organopolysiloxane réticulable en élastomère un stabilisant thermique **(S)** tel que défini selon l'une quelconque des revendications 7 à 9.

## Patentansprüche

1. Organopolysiloxanzusammensetzung, die zu einem Elastomer vernetzbar ist, was bei Vernetzung zu einem thermisch stabilen Elastomer führt, umfassend mindestens einen thermischen Stabilisator (S), bei dem es sich um einen Eisen(III)-Komplex der Formel:
Fe[Lₓ;B_{y};C_{z}]
handelt, wobei:
- x, y und z für die Zahl der Mole jeder Spezies stehen, wobei:
- 0 < x ≤ 3; 0 < y ≤ (3-x-z); 0 ≤ z ≤ (3-x-y) und [x + y + z] = 3,
- es sich bei dem Liganden L um ein β-Diketonat (A), das sich von einem β-Diketon der folgenden Formel (I) ableitet, handelt: 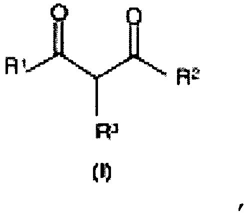 wobei:
- R¹ für eine Gruppe steht, die durch die folgende Formel (II) wiedergegeben wird:
(Y)ₙ-Φ- **(II)**,
wobei:
- n für eine ganze Zahl von 0 bis 5 steht,
- Φ für ein Phenyl steht und
- jede Gruppe Y gleich oder verschieden ist und für ein Wasserstoffatom oder eine Gruppe, die aus der Gruppe bestehend aus einer Kohlenwasserstoffkette mit 1 bis 40 Kohlenstoffatomen, einem Alkoxy, einer Silylgruppe und einem Halogenatom ausgewählt ist, steht;
- die Gruppe R² für eine Gruppe mit der gleichen Definition wie R¹, die mit R¹ identisch oder davon verschieden ist, ein Wasserstoffatom oder eine Gruppe, die aus der Gruppe bestehend aus einem Kohlenwasserstoffrest mit 1 bis 40 Kohlenstoffatomen, der gegebenenfalls durch ein oder mehrere Sauerstoffatome unterbrochen ist, einem Aralkylrest, einem Alkoxy und einer Silylgruppe ausgewählt ist, steht;
- die Gruppe R³ für ein Wasserstoffatom oder eine Kohlenwasserstoffgruppe mit 1 bis 40 Kohlenstoffatomen, die gegebenenfalls durch ein oder mehrere Heteroatome unterbrochen ist, steht und
- R¹, R² und R³ gegebenenfalls paarweise durch eine Kohlenwasserstoffkette, die gegebenenfalls durch ein oder mehrere Heteroatome unterbrochen ist, zu einem Ring verbunden sein können, und
- die Liganden B und C gleich oder verschieden sind und für Carboxylate stehen.

2. Zusammensetzung nach Anspruch 1, wobei die Liganden B und C gleich oder verschieden sind und die Formel:
R⁴COO)⁻
aufweisen, wobei R⁴ für einen gegebenenfalls substituierten einwertigen organischen C₁-C₄₀-Kohlenwasserstoffrest steht.

3. Zusammensetzung nach Anspruch 1, wobei die Liganden B und C gleich oder verschieden sind und aus der Gruppe bestehend aus einem aromatischen Carboxylat und einem gesättigten C₁-C₄₀-Fettsäurecarboxylat ausgewählt sind.

4. Zusammensetzung nach Anspruch 3, wobei die Liganden B und C aus den Anionen der folgenden korrespondierenden Säuren ausgewählt sind:
- Ameisensäure, Essigsäure, Propionsäure, Buttersäure, Capronsäure, Caprylsäure, Caprinsäure, Laurinsäure, Myristinsäure, Palmitinsäure, Margarinsäure, Stearinsäure, Arachidinsäure, Behensäure, Lignocerinsäure, Cerotinsäure, Montansäure, Melissinsäure, Laceroinsäure und Bezoesäure.

5. Zusammensetzung nach einem der vorhergehenden Ansprüche, wobei sich das β-Diketonat (A) von einem Stearoylbenzoylmethan-β-diketon der folgenden Formel (II) ableitet:

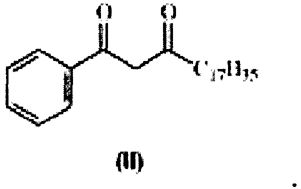

6. Thermisch stabiles Organopolysiloxan-Elastomer, das durch Härtung und/oder Vernetzung einer Zusammensetzung gemäß einem der Ansprüche 1 bis 5 erhältlich ist.

7. Thermischer Stabilisator (S) für eine zu einem Elastomer vernetzbare Organopolysiloxanzusammensetzung, bei dem es sich um einen Eisen(III)-Komplex der Formel:
Fe[Lₓ;B_{y};C_{z}]
handelt, wobei:
- x, y und z für die Zahl der Mole jeder Spezies stehen, wobei:
- 0 < x ≤ 3; 0 < y ≤ (3-x-z); 0 ≤ z ≤ (3-x-y) und [x + y + z] = 3,
- es sich bei dem Liganden L um ein β-Diketonat (A) gemäß Anspruch 1 handelt und
- die Liganden B und C gleich oder verschieden sind und für Carboxylate stehen.

8. Thermischer Stabilisator (S) nach Anspruch 7, wobei sich das β-Diketonat (A) von einem Stearoylbenzoylmethan-β-diketon der folgenden Formel (II) ableitet:

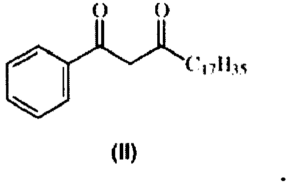

9. Thermischer Stabilisator (S) nach Anspruch 7, wobei
- 0 < x ≤ 3; 0 < y ≤ (3-x-z); 0 ≤ z ≤ (3-x-y) und [x + y + z] = 3, und
- die Liganden B und C aus der Gruppe bestehend aus einem gesättigten C₁-C₄₀-Fettsäurecarboxylat und einem aromatischen Carboxylat ausgewählt sind.

10. Verwendung eines thermischen Stabilisators (S) gemäß einem der Ansprüche 7 bis 9 zur Herstellung eines thermisch stabilen Elastomers aus einer zu einem Elastomer vernetzbaren Organopolysiloxanzusammensetzung.

11. Verfahren zur thermischen Stabilisierung eines Silikon-Elastomers, **dadurch gekennzeichnet, dass** man einer zu einem Elastomer vernetzbaren Organopolysiloxanzusammensetzung einen thermischen Stabilisator (S) gemäß einem der Ansprüche 7 bis 9 zusetzt.

## Claims

1. Organopolysiloxane composition which crosslinks to give an elastomer, resulting, when it is crosslinked, in a thermally stable elastomer, comprising at least one thermal stabilizer **(S)** which is an iron(III) complex having the formula:
Fe[Lₓ;B_{y};C_{z}]
in which:
- x, y and z represent the number of moles of each species with:
- 0< x ≤ 3, 0 ≤ y ≤ (3-x-z); 0 ≤ z ≤ (3-x-y) and [x+y+z] = 3,
- the ligand **L** is a β-diketonate **(A)** derived from a β-diketone of formula **(I)** below: 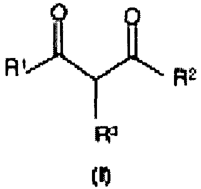 in which:
- R¹ is a group represented by formula **(II)** below:
(Y)ₙ-Φ- **(II)**
in which:
- n is an integer from 0 to 5,
- Φ is a phenyl, and
- each group Y, which may be identical or different, is a hydrogen atom or a group chosen from the group constituted of a hydrocarbon-based chain containing from 1 to 40 carbon atoms, an alkoxy, a silylated group and a halogen atom;
- the group R² represents a group having the same definition as R¹, identical or different than R¹, a hydrogen atom or a group chosen from the group constituted of a hydrocarbon-based radical containing from 1 to 40 carbon atoms, optionally interrupted with one or more oxygen atoms, an aralkyl radical, an alkoxy and a silylated group;
- the group R³ represents a hydrogen atom or a hydrocarbon-based group containing from 1 to 40 carbon atoms, optionally interrupted with one or more heteroatom(s), and
- it being possible for R¹, R² and R³ to be optionally connected together in pairs by a hydrocarbon-based chain optionally interrupted with one or more heteroatom(s), so as to form a ring, and
- the ligands **B** and **C,** which may be identical or different, are carboxylates.

2. Composition according to Claim 1, in which the ligands **B** and **C,** which may be identical or different, have the formula:
R⁴COO⁻
- in which R⁴ is an optionally substituted, C₁-C₄₀ hydrocarbon-based monovalent organic radical.

3. Composition according to Claim 1, in which the ligands **B** and **C,** which may be identical or different, are chosen from the group constituted of an aromatic carboxylate and a C₁-C₄₀ saturated fatty acid carboxylate.

4. Composition according to Claim 3, in which the ligands **B** and **C** are chosen from the anions of the following corresponding acids:
- formic acid, acetic acid, propionic acid, butyric acid, caproic acid, caprylic acid, capric acid, lauric acid, myristic acid, palmitic acid, margaric acid, stearic acid, arachidic acid, behenic acid, lignoceric acid, cerotic acid, montanic acid, melissic acid, laceroic acid and benzoic acid.

5. Composition according to one of the preceding claims, in which the β-diketonate **(A)** is derived from a stearoylbenzoylmethane β-diketone of formula **(II)** below

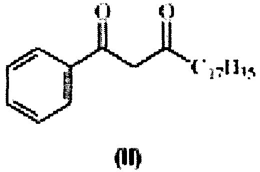

6. Thermally stable organopolysiloxane elastomer that can be obtained by curing and/or crosslinking a composition as defined in any one of Claims 1 to 5.

7. Thermal stabilizer **(S)** for an organopolysiloxane composition which crosslinks to give an elastomer which is an iron(III) complex having the formula:
Fe[Lₓ;B_{y};C_{z}]
in which
- x, y and z represent the number of moles of each species with:
- 0 ≤ x ≤ 3, 0 ≤ y ≤ (3-x-z); 0 ≤ z ≤ (3-x-y) and [x+y+z] = 3,
- the ligand **L** is a β-diketonate **(A)** as defined according to claim 1, and
- the ligands **B** and **C,** which may be identical or different, are carboxylates.

8. Thermal stabilizer **(S)** according to Claim 7, in which the β-diketonate **(A)** is derived from a stearoylbenzoylmethane β-diketone of formula **(II)** below

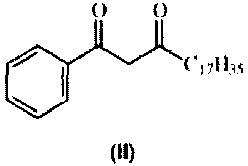

9. Thermal stabilizer **(S)** according to Claim 7, in which
- 0 < x ≤ 3, 0 ≤ y ≤ (3-x-z);0 ≤ z ≤ (3-x-y) and [x+y+z] = 3, and
- the ligands **B** and **C,** which may be identical or different, are chosen from the group constituted of a C₁-C₄₀ saturated fatty acid carboxylate and an aromatic carboxylate.

10. Use of a thermal stabilizer **(S)** as defined in any one of Claims 7 to 9, for preparing a thermally stable elastomer from an organopolysiloxane composition which crosslinks to give an elastomer.

11. Method for thermally stabilizing a silicone elastomer, **characterized in that** a thermal stabilizer **(S)** as defined in any one of Claims 7 to 9 is added to an organopolysiloxane composition which crosslinks to give an elastomer.
